# EUROPEAN PATENT SPECIFICATION

(11) **EP 1 939 121 B1**
(45) Date of publication and mention of the grant of the patent: **16.09.2009**
(21) Application number: 06425867.6
(22) Date of filing: 29.12.2006
(51) Int. Cl.: B65G 69/28, B60P 1/43

(54) **Inclined access ramp for the rear end of a vehicle for transporting vehicles**
Schrägrampe für Zugang am hinteren Ende eines Kraftfahrzeugtransporters
Rampe inclinée d'accès pour l'extremité arrière d'un porte-véhicules

(43) Date of publication of application: 02.07.2008
(73) Proprietor: ROLFO S.p.A., 12042 Bra (Cuneo) (IT)
(72) Inventor: Ghirardo, Giovanni, 12042 Bra (CN) (IT)
(74) Representative: Garavelli, Paolo

(56) References cited:
- EP-A1- 0 655 366
- US-A- 4 084 713
- US-A- 6 009 587
- US-A1- 2003 145 398

## Description

The present invention refers to an inclined access ramp for the rear end of a vehicle for transporting vehicles.

Ramps of this type are known in the art. The most widespreaded one is the subject matter of document EP-A-0 655 366. Its characteristic, in order to facilitate the access of vehicles to be transported on the transporting vehicle, is the presence of a plurality of fingers hinged on a ramp end and adapted to project from the ramp overall sizes, position in which the fingers are when resting, to assume an outside open position that operates as lead-in for loading the motor vehicles.

Such projecting fingers are preferably three and obviously are all adapted to be opened to allow loading the motor vehicles, or, as stated, could be also individually opened, but this scarcely makes sense in practice, or some of them only could be opened, if the reduced overall sizes of the motor vehicles to be loaded so allow. However, it is clear that, for a practical use, opening of such fingers occurs and shoud always occur globally and simultaneously.

US-A-4 084 713 discloses a ramp whose channels and projections are perpendicular to the up/down loading direction of the ramp.

Object of the present invention is solving the above prior art problems, by providing an inclined ramp that allows avoiding, under particular vehicle loading situation, the interferences that in the past resulted in possible impacts of the front vehicle part against the inclined ramp base, and that now, due to the particular arrangement of the ramp, are wholly avoided.

A further object of the present invention is providing an inclined ramp as mentioned above, that could be realised in various configurations, with a simple and sturdy structure and at a reduced cost.

The above and other objects and advantages of the invention, as will appear from the following description, are obtained with an inclined access ramp for the rear end of a vehicle for transporting vehicles as described in claim 1. Preferred embodiments and non-trivial variations of the present invention are the subject matter of the dependent claims.

The present invention will be better described by some preferred embodiments thereof, provided as a non-limiting example, with reference to the enclosed drawings, in which:
- Fig. 1 is a perspective view of a first embodiment of the inclined ramp of the present invention in its operating opening position;
- Fig. 2 is a perspective view, similar to Fig. 1, in which the inclined ramp is shown in its operating closing position;
- Fig. 3 is a top view of the inclined ramp of Fig. 1;
- Fig. 3A is a top view similar to Fig. 3, that better points out the sectional shape of the ramp and its extension;
- Fig. 4 is a side view of the inclined ramp of Fig. 1 that shows the movement to obtain the two positions of Fig. 1 and 2;
- Fig. 5 is a perspective view of a second embodiment of the inclined ramp of the present invention in its operating opening position;
- Fig. 6 is a top view of the inclined ramp of Fig. 5; and
- Fig. 7 is a top view of the inclined ramp of Fig. 5 in its resting position.

With reference to the Figures, the inclined ramp 10 of the present invention allows accessing, in a known way, to the rear end of a vehicle (not shown) for transporting vehicles (not shown).

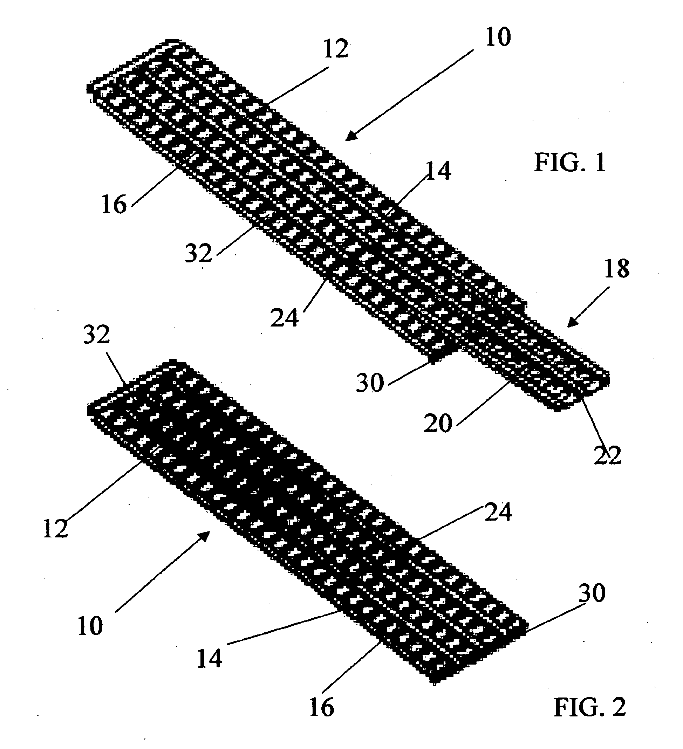

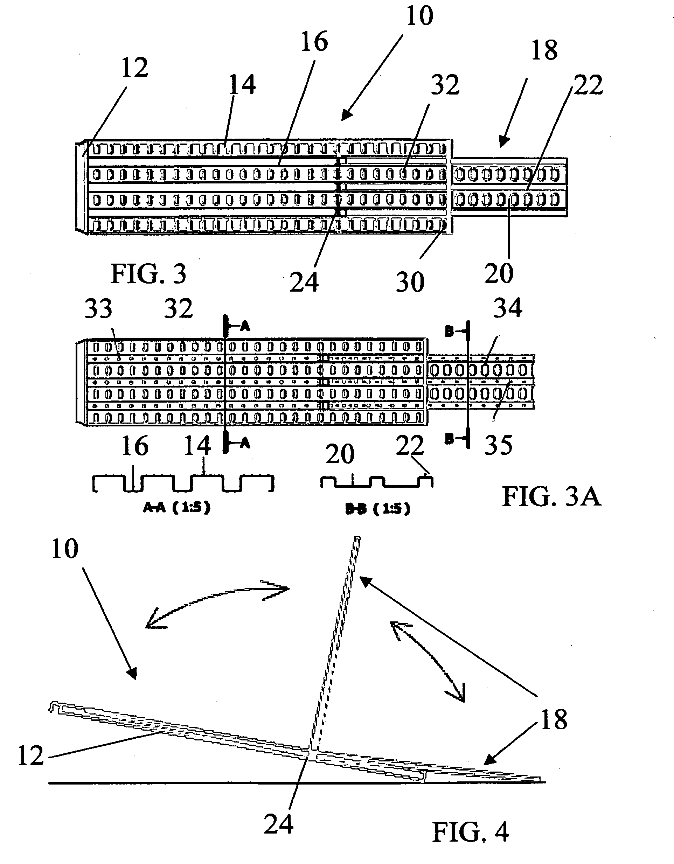

Such inclined ramp 10 comprises a body 12 having a substantially rectangular shape, whose surface comprises a transverse alternance of channels 16 and projections 14 on which the wheels of the vehicles to be loaded will rest. The body 12 of the inventive ramp 10 is further equipped, as better shown in Figures 1 to 4, with an elongation appendix 18 hinged inside the body 12 itself, in which such appendix 18 is composed of a transverse alternance of channels 20 and projections 22 respectively corresponding to the projections 14 and the channels 16 of the body 12 and sectionally shaped in a complementary way with respect to projections 14 and channels 16 of the body 12.

The appendix 18 is adapted to assume, through a rotation around its hinging axis 24 placed inside the body 12, a resting position in which the channels 20 of the appendix 18 are placed above the projections 14 of the body 12 and the projections 22 of the appendix 18 are placed inside the channels 16 of the body 12, and an operating position in which the appendix 18 goes out of the body 12 in order to be an operating elongation for loading the vehicles to be transported on the transporting vehicle.

In its resting position, the appendix 18 is thereby in practice taken back inside the overall height dimensions of the body 12 of the ramp 10 and therefore it is not an obstacle to operations to be performed on the ramp 10 itself.

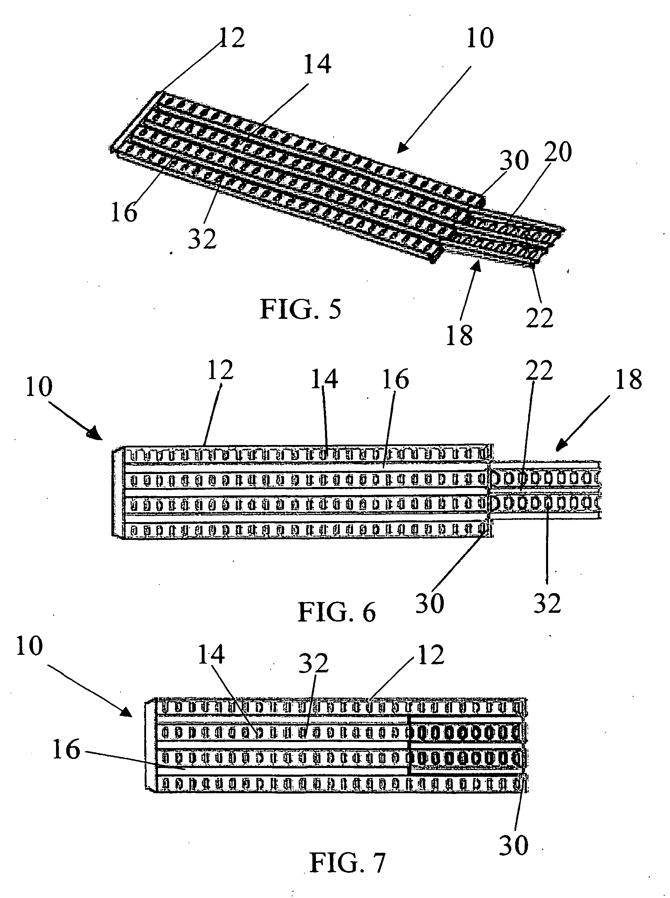

Moreover, according to another variation of an embodiment shown in Figures 5 to 7, the inclined ramp 10 of the invention can provide that the appendix 18 is hinged next to the loading end 30 of the body 12, remaining adapted to rotate in the two, above described resting and operating positions, and increasing the manufacturing flexibility of the ramp 10 in order to better suit it to the different application loading and transporting needs.

All Figures show the arrangement in which the loading width of the appendix 18 is less than the width of the body 12; obviously, always according to application loading and transporting needs, the loading width of the appendix 18 can also be equal or even greater than the width of the body 12, without anyway impairing the loading modes and functionalities of the ramp 10 of the invention.

The inclined ramp 10 of the invention can further be equipped with a plurality of openings 32 placed on top of the projections 14 and with a plurality of openings 33 placed on the bottom of the channels 16.

Also the appendix 18 can be equipped with a plurality of openings 34 placed on the bottom of the channels 20 and with a plurality of openings 35 placed on top of the projections 22.

Purpose of such openings 32 is allowing to drain water or other substances and providing a better gripping surface for the tires of vehicles to be loaded.

Moreover, preferably, the body 12 and the appendix 18 are made of a steel corrugated plate, but obviously other solutions are possible for the material and the main component of which the ramp 10 is composed.

Finally, in order to make loading operations easier, the appendix 18 can be bevelled at its end that first comes in contact with the wheels of the vehicles to be loaded.

## Claims

1. Inclined access ramp (10) for the rear end of a vehicle for transporting vehicles, comprising a body (12) with a substantially rectangular shape, whose surface comprises a transverse alternance of channels (16) and projections (14), said channels (16) and projections (14) being arranged with their respective longitudinal axes parallel to the longitudinal axis of the ramp, **characterised in that** said body (12) is equipped with an elongation appendix (18) hinged inside said body (12), said appendix (18) being composed of a transverse alternance of channels (20) and projections (22), respectively corresponding to projections (14) and channels (16) of said body (12) and sectionally shaped in a complementary way with respect to projections (14) and channels (16) of said body (12), said appendix (18) being adapted to assume, through a rotation around its hinging axis (24) placed on said body (12), a resting position in which the channels (20) of said appendix (18) are placed over the projections (14) of said body (12) and the projections (22) of said appendix (18) are placed inside the channels (16) of said body (12), and an operating position in which said appendix (18) goes out of said body (12) in order to be an operating elongation for loading said vehicles to be transported on said transporting vehicle.

2. Inclined ramp (10) according to claim 1, **characterised in that** said appendix (18) is hinged next to the loading end (30) of said body (12).

3. Inclined ramp (10) according to claim 1 o 2, **characterised in that** the loading width of said appendix (18) is less than the loading width of said body (12).

4. Inclined ramp (10) according to claim 1 or 2, **characterised in that** the loading width of said appendix (18) is equal to the loading width of said body (12).

5. Inclined ramp (10) according to claim 1 or 2, **characterised in that** the loading width of said appendix (18) is greater than the loading width of said body (12).

6. Inclined ramp (10) according to any one of the previous claims, **characterised in that** it is equipped with a plurality of openings (33) placed on the bottom of said channels (16).

7. Inclined ramp (10) according to any one of the previous claims, **characterised in that** said appendix (18) is equipped with a plurality of openings (35) placed on the bottom of said channels (20).

8. Inclined ramp (10) according to any one of the previous claims, **characterised in that** said appendix (18) is equipped with a plurality of openings (34) placed on top of said projections (22).

9. Inclined ramp (10) according to any one of the previous claims, **characterised in that** the body (12) and the appendix (18) are made of a steel corrugated sheet.

10. Inclined ramp (10) according to any one of the previous claims, **characterised in that** the appendix (18) is bevelled at its end that first comes in contact with the wheels of vehicles to be loaded.

## Patentansprüche

1. Geneigte Auffahrrampe (10) auf der Rückseite eines Fahrzeuges für den Fahrzeugtransport, die einen grundlegend rechteckig geformten Körper (12) einschließt, deren Fläche abwechselnd transversale Kanäle (16) und Überstände (14) enthält, die genannten Kanäle (16) und Überstände (14) sind mit ihren entsprechenden Längsachsen parallel zur Längsachse der Rampe angeordnet, die **dadurch gekennzeichnet ist, dass** der genannte Körper (12) mit einem aufklappbaren Endstück zur Verlängerung (18) intern im genannten Körper (12) ausgestattet ist, das genannte Endstück (18) besteht aus sich abwechselnden transversalen Kanälen (20) und Überständen (22), die entsprechend mit den Überständen (14) und Kanälen (16) des genannten Körpers (12) übereinstimmen und im Querschnitt vervollständigend zu den Überständen (14) und Kanälen (16) des genannten Körpers (12) geformt sind, das genannte Endstück (18) dient dazu, durch Drehung um seine aufklappbare Achse (24), die im genannten Körper (12) angeordnet ist, eine Ruhestellung einzunehmen, in der die Kanäle (20) des genannten Endstücks (18) über den Überständen (14) des genannten Körpers (12) und die Überstände (22) des genannten Körpers (18) innerhalb der Kanäle (16) des genannten Körpers (12) angeordnet sind, und eine Betriebsposition einzunehmen, in der das genannte Endstück (18) aus dem genannten Körper (12) herauskommt, sodass es eine Betriebsverlängerung für die Ladung der genannten Fahrzeuge darstellt, die auf dem genannten Transportfahrzeug zu transportieren sind.

2. Geneigte Rampe (10) gemäß Patentanspruch 1, die **dadurch gekennzeichnet ist, dass** das genannte Endstück (18) am Ende (30) für die Ladung des genannten Körpers (12) aufklappbar ist.

3. Geneigte Rampe (10) gemäß Patentanspruch 1 oder 2, die **dadurch gekennzeichnet ist, dass** die Breite der Ladung des genannten Endstücks (18) kleiner als die Breite der Ladung des genannten Körpers (12) ist.

4. Geneigte Rampe (10) gemäß Patentanspruch 1 oder 2, die **dadurch gekennzeichnet ist, dass** die Breite des genannten Endstücks (18) genauso groß wie die Breite der Ladung des genannten Körpers (12) ist.

5. Geneigte Rampe (10) gemäß Patentanspruch 1 oder 2, die **dadurch gekennzeichnet ist, dass** die Breite des genannten Endstücks (18) größer als die Breite der Ladung des genannten Körpers (12) ist.

6. Geneigte Rampe (10) gemäß einem der vorhergehenden Patentansprüche, die **dadurch gekennzeichnet ist, dass** sie mit mehreren Öffnungen (33) ausgestattet ist, die am Boden der genannten Kanäle (16) angeordnet sind.

7. Geneigte Rampe (10) gemäß einem der vorhergehenden Patentansprüche, die **dadurch gekennzeichnet ist, dass** das genannte Endstück (18) mit mehreren Öffnungen (35) ausgestattet ist, die am Boden der genannten Kanäle (20) angeordnet sind.

8. Geneigte Rampe (10) gemäß einem der vorhergehenden Patentansprüche, die **dadurch gekennzeichnet ist, dass** das genannte Endstück (18) mit mehreren Öffnungen (34) ausgestattet ist, die an der Spitze der genannten Überstände (22) angeordnet sind.

9. Geneigte Rampe (10) gemäß einem der vorhergehenden Patentansprüche, die **dadurch gekennzeichnet ist, dass** der Körper (12) und das Endstück (18) aus einem gewellten Stahlblech bestehen.

10. Geneigte Rampe (10) gemäß einem der vorhergehenden Patentansprüche, die **dadurch gekennzeichnet ist, dass** das Endstück (18) an seinem Ende, welches zuerst mit den Rädern des zu ladenden Fahrzeuges in Kontakt gerät, abgeschrägt ist.

## Revendications

1. Rampe d'accès inclinée (10) appliquée à l'extrémité arrière d'un véhicule, utile au transport de véhicules et comprenant un corps (12) de forme principalement rectangulaire, et dont la surface comprend une alternance transversale de cannelures (16) et de reliefs (14), lesdites cannelures (16) et lesdits reliefs (14) étant disposés avec leurs respectifs axes longitudinaux parallèlement à l'axe longitudinal de la rampe, **caractérisé en ce que** ledit corps (12) est pourvu d'un appendice de rallonge (18) articulé à l'intérieur de ce corps (12), ledit appendice (18) étant constitué d'une alternance transversale de cannelures (20) et de reliefs (22), correspondant respectivement aux reliefs (14) et aux cannelures (16) dudit corps (12) et conformés en section de manière complémentaire par rapport aux reliefs (14) et aux cannelures (16) dudit corps (12), cet appendice (18) étant capable de prendre, en tournant autour de son axe d'articulation (24) placé dans ledit corps (12), une position de repos où les cannelures (20) dudit appendice (18) sont placées sur les reliefs (14) dudit corps (12) et les reliefs (22) de cet appendice (18) sont placées entre les cannelures (16) dudit corps (12), et une position de travail dans laquelle cet appendice (18) fait saillie hors dudit corps (12) de manière à en constituer un prolongement opérationnel pour le chargement des véhicules à transporter sur ledit véhicule de transport.

2. Rampe inclinée (10) selon la revendication 1, **caractérisée en ce que** ledit appendice (18) est articulé en correspondance de l'extrémité (30) de chargement dudit corps (12).

3. Rampe inclinée (10) selon la revendication 1 ou 2, **caractérisée en ce que** la largeur de chargement dudit appendice (18) est inférieure à la largeur de chargement dudit corps (12).

4. Rampe inclinée (10) selon la revendication 1 ou 2, **caractérisée en ce que** la largeur de chargement dudit appendice (18) est égale à la largeur de chargement dudit corps (12).

5. Rampe inclinée (10) selon la revendication 1 ou 2, **caractérisée en ce que** la largeur de chargement dudit appendice (18) est supérieure à la largeur de chargement dudit corps (12).

6. Rampe inclinée (10) selon une quelconques des revendications précédentes, **caractérisée en ce qu'**elle est pourvue d'une pluralité d'ouvertures (33) pratiquées sur le fond desdits cannelures (16).

7. Rampe inclinée (10) selon une quelconques des revendications précédentes, **caractérisée en ce que** ledit appendice (18) est pourvu d'une pluralité d'ouvertures (35) pratiquées sur le fond desdits cannelures (20).

8. Rampe inclinée (10) selon une quelconques des revendications précédentes, **caractérisée en ce que** ledit appendice (18) est pourvu d'une pluralité d'ouvertures (34) pratiquées sur le sommet desdits reliefs (22).

9. Rampe inclinée (10) selon une quelconques des revendications précédentes, **caractérisée en ce que** ledit corps (12) et l'appendice (18) sont fait en tôle d'acier ondulée.

10. Rampe inclinée (10) selon une quelconques des revendications précédentes, **caractérisée en ce que** l'appendice (18) est biseauté sur son extrémité touchant en premier les roues des véhicules à charger.
